# EUROPEAN PATENT APPLICATION

(11) **EP 4 201 749 A1**
(43) Date of publication of application: **28.06.2023**
(21) Application number: 21216686.2
(22) Date of filing: 21.12.2021
(51) Int. Cl.: B60R 13/08, B32B 5/02, B32B 5/18, B32B 5/24, B32B 5/32, G10K 11/162, G10K 11/168, G10K 11/172, B32B 7/00, E04B 1/82, F02B 77/11

(54) **UNDERBODY TRIM PART FOR ROAD VEHICLE**

(71) Applicant: Autoneum Management AG, 8406 Winterthur (CH)
(72) Inventor: Delpero, Tommaso, 8051 Zürich (CH); Epinat, Chloé, 8037 Zürich (CH); Pfaffelhuber, Klaus, 86157 Augsburg (DE)

(57) **Abstract**

Underbody trim part for a road vehicle comprising a porous fibrous carrier layer, the trim part featuring a longitudinal direction to be aligned with the direction of travel of the road vehicle when the part is in use and further comprising an embossed foil locally bonded to the porous fibrous carrier layer, wherein the bending stiffness of the embossed foil is at least 10% of the bending stiffness of the porous fibrous carrier layer, in at least the longitudinal direction. The trim part is particularly suited to be used as an underbody liner for a vehicle. However, it may be used also as an under-engine liner or as a wheel-house outer liner.

## Description

### Technical Field

The present application relates to a trim part for a road vehicle. The trim part is particularly suitable for use in the region underneath the vehicle, for example as an underbody liner or as an under-engine liner.

### Background Art

For more than twenty years now, road vehicle manufacturers have been equipping their products with exterior cladding parts that cover the road-facing underside of the vehicle. The main purpose of these parts is to improve the aerodynamics of the vehicle and thus reduce fuel consumption and CO₂ emissions. In order to help improve the aerodynamics of the vehicle, these parts are generally of a substantially planar shape.

Besides this, it is essential that the mechanical properties of the materials they are made with are such that they are sufficiently rigid to keep their shape when installed on the vehicle, without showing any significant deformation -in particular any significant sagging- and to withstand the aerodynamic loads acting on them during use, without being damaged or breaking during the whole lifetime of the vehicle.

Mechanical properties of exterior trim parts installed in the region underneath the vehicle may be important also for their durability. In fact, over the entire life of the vehicle these parts may be subjected to environmental agents, stone chipping and occasional collisions against road obstacles and should be able to withstand all this without undergoing any substantial deterioration.

Traditionally, in order to achieve the desired mechanical properties, these parts comprise a substantially planar carrier made with a plastic material, typically produced by means of an injection moulding process. However, these traditional solutions are heavy and by adding weight to the vehicle they significantly offset the reduction in fuel consumption and CO₂ emissions achieved with the improvement of vehicle aerodynamics obtained thanks to their installation on the vehicle.

In the last decade, lighter underbody trim parts have appeared on the market, wherein the plastic carrier is replaced by a lighter porous fibrous carrier. These parts, being porous, are known to have also a positive impact on the exterior noise radiated by the vehicle, in particular on the noise radiated by the tires. However, these parts struggle to achieve the required mechanical properties.

A solution used in the prior art to achieve the desired mechanical properties for these underbody trim parts based on a porous fibrous carrier consists in including in the fiber mix for the carrier reinforcing mineral fibers such as glass-fibers or carbon-fibers. However, the use of glass-fibers or carbon-fibers may be problematic in that they may constitute a danger for the health of the persons who have to handle the part during its manufacturing or for vehicle maintenance. Furthermore, the presence of glass in the fiber mixture influences negatively the recyclability of the part at its end-of-life and adds substantial weight to the part itself.

Another solution customarily used in the prior art to achieve the desired mechanical properties for these underbody trim parts based on a porous fibrous carrier consists in modifying the shape of the carrier, by adding ribs and/or beads. However, this has a negative influence on the aerodynamics of the vehicle where the part is installed, for which a fully flat shape is preferable.

There is thus the need of underbody trim parts that are substantially lighter than prior-art underbody trim parts based on plastic carriers but that, at the same time, feature better mechanical properties than prior art underbody trim parts based on porous fibrous carriers. The object of the present invention is to provide such an underbody trim part.

### Summary of invention

The object of the invention is achieved by an underbody trim part according to claim 1, a method for producing such a trim part according to claim 18 and the use of such a trim part according to claim 19.

In particular, the object of the invention is achieved by a trim part comprising a porous fibrous carrier layer, the trim part made for being installed as the underbody of a road vehicle and featuring a longitudinal direction to be aligned with the travel direction of the road vehicle when the part is in use, wherein the trim part further comprises an embossed foil locally bonded to one side of the porous fibrous carrier layer and wherein the bending stiffness of the embossed foil, at least in the longitudinal direction, is at least 10% of the bending stiffness of the porous fibrous carrier layer.

A "layer" is a solid body consisting of one or more materials and filling the space between two closely spaced surfaces, wherein the distance between the surfaces is substantially smaller than their size. The two surfaces are indicated as the "sides" of the layer and they are opposite to each other. The distance between the two surfaces is referred to as the thickness of the layer, which may be variable.

A "porous fibrous carrier layer" is a layer which consists of one or more porous fibrous materials and that is able to keep its shape under the dead load of its own gravity without undergoing any substantial deformation, independently from its orientation in space.

In a broad sense, the "bending stiffness" of a trim part and/or of a layer, in particular a porous fibrous carrier layer, expresses its resistance against bending deformation. A typical mechanical load inducing a bending deformation in a layer and/or in a part comprising it is a pressure applied on one of its sides; such a mechanical load will be referred to hereinafter as a "bending load". An example of bending load is the pull-down pressure exerted by an aerodynamic load on the porous fibrous carrier layer of an underbody trim part covering the road-facing side of a road vehicle.

However, in materials engineering, as well as in this application, the " bending stiffness" is more precisely referred to the case in which the bending load is concentrated on a specific plane, wherein the direction normal to this plane is referred to as "bending direction". Layers consisting of orthotropic materials and/or having mechanical properties that vary over their surface may have a different bending stiffness in different bending directions.

Even more specifically, in the case of an underbody trim part for a road vehicle according to the invention as well as for the porous fibrous carrier layer and embossed foil comprised in it, the bending stiffness is hereinafter generally referred (unless otherwise specified) to the longitudinal direction, i.e. the direction intended to be aligned with the direction of travel of the road vehicle when the part is in use.

Surprisingly, it was found that it is possible to improve the mechanical properties of the porous fibrous carrier layer, in particular increase its bending stiffness in the longitudinal direction, by combining it with a foil according to the invention, i.e. a very thin and sheet-like layer of material which, in itself, is very flexible in bending.

Even more surprisingly it was found that, thanks to an increase of the bending stiffness even in just the longitudinal direction, the overall ability of an underbody trim part according to the invention to resist a general bending load is improved, compared to that of the porous fibrous carrier layer alone.

The analysis of the stiffening effect obtained by combining the porous fibrous carrier layer with a foil according to the invention led to understand that, surprisingly, the foil according to the invention is actually capable of storing a substantial fraction of the total deformation energy of the trim part according to the invention, when this same part deforms under the action of a bending load acting on the porous fibrous carrier layer. By doing this, the foil strongly contributes to the capability of the part to resist the bending load and thus limits the deflection of the part itself, compared to the case of the porous fibrous carrier alone.

In fact, in the trim part according to the invention, a deformation is induced also in the foil, when the porous fibrous carrier layer is subjected to a bending load and deforms under its action, so that, under a bending load, the porous fibrous carrier layer and the foil according to the invention deform together as a whole. This happens because, in the trim part according to the invention, the foil is structurally bonded to the porous fibrous carrier layer. However, the structural bonding does not concern the full extension of the foil. On the contrary, the foil is only locally bonded to the porous fibrous carrier layer, wherein "locally bonded" means that the foil is not bonded to the porous fibrous carrier layer over all its extension, but only in correspondence of one or more points and/or in correspondence of one or more areas.

In the areas where it is not bonded to the porous fibrous carrier layer, the foil according to the invention comprises one or more embossments, i.e. regions where it is in relief with respect to the porous fibrous carrier layer and not substantially in contact with it.

The "height" of an embossment is the maximum distance between the surface of the embossment and the porous fibrous carrier layer. Similarly, the "size" of an embossment is meant to be the typical dimension of the area obtained by projecting the embossment onto the porous fibrous carrier layer, i.e. the embossment "footprint" on the porous fibrous carrier layer. As a typical dimension, one can consider the equivalent diameter of such an area.

In the trim part according to the invention, the function of an embossment is primarily to store deformation energy when the part deforms under the action of a bending load acting directly on the porous fibrous carrier layer. An embossment comprised in the foil according to the invention can perform this function in a particularly effective way. In fact, the embossment, being in relief, i.e. in a raised position with respect to the porous fibrous carrier layer, deforms much more than this latter layer under the action of a bending load. Thanks to the high level of bending stiffness of the embossed foil, this greater deformation results in a greater level of stress and thus in a high level of storage of mechanical deformation energy.

An increase of the stiffening effect may be obtained by increasing the total area of the foil that is in relief with respect to the porous fibrous carrier layer and/or by increasing the height of the embossments. For this purpose, in the trim part according to the invention, it is preferable that the total area of the foil in relief with respect to the porous fibrous carrier layer, i.e. the total embossed area of the foil, is at least 20%, preferably at least 30% and even more preferably at least 50% of the total area of the foil.

For the same purpose, the height of the foil embossments in the trim part according to the invention is preferably at least 3mm, more preferably at least 5mm and even more preferably at least 10mm.

Surprisingly, test data have shown that a noteworthy stiffening effect may be obtained when the bending stiffness of the embossed foil is at least 10% of the bending stiffness of the porous fibrous carrier layer, at least in the longitudinal direction. Thus, the desired stiffening effect may be obtained by means of embossed foils whose intrinsic bending stiffness is much lower than that of the porous fibrous carrier layer. In order to further increase the stiffening effect, however, the bending stiffness of the embossed foil is preferably at least 20%, even more preferably at least 40% of the bending stiffness of the porous fibrous carrier layer, in at least the longitudinal direction.

Preferably, the embossed foil has a bending stiffness in the longitudinal direction of at least 0.05N/mm, more preferably of at least 0.15mm.

In the areas not interested by the embossments, the embossed foil according to the invention preferably conforms to the shape of the porous fibrous carrier layer. In these same areas, the embossed foil may be substantially in contact with the porous fibrous carrier layer, without being necessarily bonded to it. However, at least at some points and/or at some regions of these same areas, the embossed foil according to the invention is bonded to the porous fibrous carrier layer. Bonding between a region and/or a point of the embossed foil and the porous fibrous carrier layer may be obtained by common methods known in the field, i.e. by means of a glue, and/or an adhesive tape and/or an adhesive film and/or by welding (e.g. ultrasound welding) and/or by a thermo-bonding process.

In order to foster the desired stiffening effect, it is preferable that the foil is bonded to the porous fibrous carrier layer over all the areas that are not interested by the embossments. However, and very surprisingly, a noteworthy stiffening effect may be obtained even when the embossed foil is bonded to the porous fibrous carrier layer over an area that is much smaller than the overall non-embossed area, for example when the embossed foil is welded to the porous fibrous carrier layer just at a limited number of points distributed around its boundary.

In an advantageous embodiment of the trim part according to the invention, the embossments are arranged in such a way that any plane section of the embossed foil cut perpendicularly to the longitudinal direction intersects at least one embossment. It is observed that when the embossments are arranged in this way, the increase of bending stiffness in the longitudinal direction is particularly pronounced.

In a further preferred embodiment of the trim part according to the invention, the embossments are arranged in such a way that any plane section of the embossed foil intersects at least one embossment, independently from its orientation. With this embodiment, it is possible to further enhance the overall bending stiffness of the trim part according to the invention, even for bending directions different from the longitudinal direction.

However, while these arrangements of the embossments turn out to be particularly advantageous, other and different arrangements do not compromise the overall stiffening effect obtained thanks to the embossed foil according to the invention.

An embossment comprised in the embossed foil may be shaped in several different ways. For example, an embossment may be shaped like a right or tapered parallelepiped or, more in general, like a right or tapered prism having triangular or polygonal section. For a given height and a given size, the shape of an embossment may have an influence on the mechanical performance of the trim part according to the invention.

In a preferred embodiment, the embossed layer comprises a multiplicity of embossments having the shape of a cross, with arms of the same length or of different lengths. It was observed that for a given height and size of the embossments, this embodiment has a bending stiffness higher than that obtained with other shapes, e.g. a prism having a hexagonal section.

The embossments comprised in the embossed foil may all have the same shape or they may have different shapes, depending on the needs dictated by the circumstances, e.g. packaging space.

Surprisingly, a foil according to the invention may be realized already with very thin and lightweight embossed foils. In the underbody trim part according to the invention, the embossed foil has preferably a thickness between 0.2mm and 1.0mm, more preferably between 0.3mm and 0.7mm and an area weight preferably between 100g/m² and 1000g/m², more preferably between 300g/m² and 700g/m². With this, the increase in stiffness for the trim part according to the invention compared to the case of the porous fibrous carrier layer alone is obtained with a correspondingly very limited increase in weight.

The area weight of the embossed foil is meant to be measured on substantially flat samples cut-out from it. For the evaluation of the area weight of the embossed foil, an average over at least 10 samples covering an overall area of at least 100cm² should be taken.

The embossed foil comprised in the trim part according to the invention preferably consists of a single material, which may result in an easier and cheaper production. Preferably, this material is a polyester or a polyolefin. Further preferably, this material comprises at least one of the polymers or copolymers selected from the group consisting of polyester such as polyethylene terephthalate (PET) or polybutylene terephthalate (PBT), polyamide such as polyamide 6 or polyamide 66, polyolefin such as a polyethylene (PE), polypropylene (PP), low density polyethylene (LDPE), linear low density polyethylene (LLDPE) or high density polyethylene (HDPE).

In another embodiment, the embossed foil may consist of two or more sub-layers, each consisting of a different material. Preferably, the material used for each sub-layer has characteristics similar to those described for the case in which the embossed foil consists of a single material. The use of multi-layers for the embossed foil may be advantageous to increase stability and/or robustness of the trim part according to the invention.

The above-mentioned materials represent just possible examples of materials to be used for the embossed foil, which may be realized also with other materials known in the art.

In order to obtain the desired stiffening effect, the embossed foil may be partially bonded on either side of the porous fibrous carrier layer. However, in a preferred embodiment the porous fibrous carrier layer has one side for facing the vehicle and one side for facing the road and the embossed foil is partially bonded to the side for facing the vehicle. With this embodiment, one avoids that the foil embossments interfere with the air-flow under the vehicle while the vehicle is in use and this improves vehicle aerodynamics. With this embodiment, it is thus possible to obtain an underbody trim part that features an optimal combination of mechanical stiffness and aerodynamics, without having to modify the design of the porous fibrous carrier layer in a way that may be detrimental for the vehicle aerodynamics, e.g. by the addition of ribs.

In a further preferred embodiment, the embossed foil is partially bonded to the side of the porous fibrous carrier layer for facing the vehicle and, furthermore, the embossed foil comprises at least one embossment that cooperates with a portion of the porous fibrous structural layer to form a substantially closed cavity. This embodiment is particularly advantageous in that the acoustic properties of the trim part according to the invention are, very surprisingly, enhanced compared to those of the porous fibrous carrier layer alone, in particular for what concerns its capability to absorb the acoustic waves impinging on it from the side facing the road. In this embodiment, the part according to the invention can thus help reduce the exterior noise radiated by the vehicle, in particular tire noise.

In this specific embodiment, the embossed layer is partially bonded to the side of the porous fibrous carrier layer for facing the vehicle and it comprises at least one embossment that cooperates with a portion of the porous fibrous carrier layer to form a cavity, whose walls will consist of two parts: a first part formed by the embossment and a second part formed by said portion of the porous fibrous carrier layer.

Surprisingly, an acoustic wave impinging on this portion of the porous fibrous carrier layer from the side for facing the road may be absorbed to a much greater extent compared to the case in which the porous fibrous carrier layer is considered as a stand-alone sound absorber. This is indeed very surprising, since the improvement may be achieved by combining the porous fibrous carrier layer with a foil, which may have in itself little or no sound absorbing capabilities due to its very limited thickness.

The analysis of this acoustic effect showed that it may be seen as resulting from a coupling between the vibrations of the portion of the porous fibrous carrier layer that cooperates with the embossment to form a cavity and the oscillating acoustic pressure inside the air volume of the cavity itself. When the acoustic wavelength is substantially larger than the size of the cavity, the acoustic pressure in the cavity is essentially constant in space and it oscillates in time with the frequency of the impinging sound wave. In these conditions, the cavity may act as an "acoustic spring", which is cyclically compressed and released and exerts an oscillating pressure on the portion of the porous fibrous carrier layer in contact with the cavity. This portion of the porous fibrous carrier layer will vibrate under the load of this pressure, acting as a "porous mass" and giving rise to an "acoustic spring-porous mass" system. This system may absorb the acoustic energy impinging on it from the side of the porous fibrous carrier layer for facing the road in a very efficient way and, in particular, in a much more efficient way than the porous fibrous carrier layer alone. This is true especially on a specific frequency range determined by the geometry of the cavity and by the characteristics of the porous fibrous carrier layer, primarily its airflow resistance. In fact, the vibro-acoustic coupling between the cavity and the portion of the porous fibrous carrier layer in contact with it depend mostly on this feature.

The noise absorbing characteristics of the above-mentioned "acoustic spring-porous mass" system and then of the trim part according to the invention may thus be advantageously optimized by fine-tuning the geometry of the embossment and the physical properties of the porous fibrous carrier layer, in particular its airflow resistivity.

More specifically, the height and the size of the embossment may be adjusted in order to obtain an optimal absorption over a specific predefined frequency range. For a fixed targeted frequency range, the size of an embossment that cooperates with a portion of the porous fibrous carrier layer to form a cavity should be chosen substantially smaller but of the same order of magnitude of the acoustic wavelength over the targeted frequency range. Indicatively, the size of the embossment should be comprised between 1/10^{th} and ½ of the acoustic wavelength. In fact, cavities having dimensions smaller than 1/10^{th} of the wavelength result in " too stiff" acoustic springs, whose benefit is confined to frequencies above the targeted frequency range. Furthermore, too small cavities result also in inefficient acoustic springs, due to the small amount of air contained in them. Vice-versa, cavities having dimensions larger than half a wavelength result in "too soft" acoustic springs, whose benefit is confined to frequencies below the targeted frequency range.

In addition to this, the larger is the height of an embossment cooperating with a portion of the porous fibrous carrier layer to form a cavity, the taller the cavity becomes and the lower the frequency range over which the " acoustic spring-porous mass" system constituted by this cavity and the portion of the porous fibrous carrier layer that is in contact with it absorbs noise in an optimal way.

The embossments may all have the same height and/or size or they may have different heights and/or sizes. Differences in the height and/or size of the embossments may be determined by packaging space constraints. However, these differences may also be purposefully designed, for example, to obtain a more broadband acoustic absorption and/or to obtain an optimal acoustic absorption in different frequency ranges for different areas of the trim part.

Furthermore, the airflow resistivity (AFR) of a portion of the porous fibrous carrier layer cooperating with an embossment to form a cavity may influence the frequency range where the noise absorption of the corresponding "acoustic spring-porous mass" system is optimal and may be adjusted in order to tune it as desired. In particular, the higher is the airflow resistivity, the lower is this frequency range. However, a too high airflow resistivity may strongly penalize the absorption of the trim part in the high frequencies.

In the trim part according to the invention, the embossments have a height preferably comprised between 3mm and 50mm, more preferably between 7mm and 30mm and even more preferably between 10mm and 25mm.

Furthermore, the size of the embossments is preferably between 20mm and 200mm, more preferably between 30mm and 150mm, even more preferably between 40mm and 100mm.

In the trim part according to the invention, the porous fibrous carrier layer has preferably an airflow resistivity between 100Ns/m³ and 3500Ns/m³, more preferably between 200Ns/m³ and 2000Ns/m³ and even more preferably between 300Ns/m³ and 1300Ns/m³, wherein the airflow resistivity is measured according to ISO 9053-1:2018.

Test results indicate that the above mentioned ranges for the height and the size of the embossments and for the airflow resistivity of the porous fibrous carrier layer, especially when they are combined, are particularly suitable to obtain an optimal absorption performance in the frequency range between 800Hz and 1400Hz, which is known to be the most relevant for tire noise.

In the trim part according to the invention, preferably, the embossed foil comprises not just one embossment but a multiplicity of embossments each cooperating with the porous fibrous carrier layer to form a cavity, so that a multiplicity of cavities is formed, comprised between the embossed foil and the porous fibrous carrier layer, on the side of the porous fibrous carrier layer that is for facing the vehicle. The larger is the overall surface of the portions of the porous fibrous carrier layer that cooperate with embossments to form cavities on the side opposite to the one facing the noise source, the higher is the improvement in sound absorption obtained with the trim part according to the invention, compared to the case of the porous fibrous carrier layer alone. Preferably, said overall surface is at least 20%, more preferably at least 30%, even more preferably at least 50% of the total surface of the side of the porous fibrous carrier layer that is for facing the vehicle.

The porous fibrous carrier layer preferably comprises one or more fibrous materials.

In one embodiment, the porous fibrous carrier layer comprises thermoplastic bicomponent filaments. A filament is a continuous fibre with an indefinite length. Filaments are also known as endless filaments or continuous filaments.

Bicomponent filaments are synthetic fibers which are made from two polymers, a first polymer and a second polymer, of different chemical and/or physical structure that are tightly but separably connected to each other. Bicomponent filaments may be produced using processes known in the art, e.g. by melt spinning. In this process, the polymers are spun by a spinneret into a fiber either next to each other (side-by-side configuration) or around each other (core-sheath configuration) or in a mixture with an inhomogeneous distribution (island-in-the-sea or segmented-pie configuration). In addition, the filaments can have different cross-sections; preferably, the filaments used have a round or trilobal cross-section. In a bicomponent filament, the second polymer has a melting point lower than the melting point of the first polymer so that upon heating the bicomponent fibers, the first and second polymers react differently. When the bicomponent filaments are heated to a temperature that is above the softening or melting point of the second polymer (e.g. the sheath polymer, in a sheath-core configuration) and below the melting point of the first polymer (e.g. the core polymer, in a sheath-core configuration), the second polymer will soften or melt while the first polymer does not. A softening of the second polymer will cause the second polymer to become sticky and bond to filaments that may be in close proximity. At the same time, a melting of the second polymer will cause the formation of droplets binding adjacent fibers at their crossing points, while the first polymer stays intact and forms a network of filaments in the final product.

Starting from a non-woven fibrous porous mat comprising bicomponent filaments and compressing it under heat at a temperature higher than the softening or melting temperature of the second polymer, but lower than the softening or melting temperature of the first polymer it is possible to obtain a consolidated and compact porous fibrous carrier layer which has a structural nature thanks to the network of endless filaments comprised in it that, being continuous, may span large areas and that are bound together by a multitude of randomly distributed contact points.

Preferably, the diameter of the filaments is between 14 microns and 37 microns, more preferably between 20 microns and 25 microns, for increased strength.

In a preferred embodiment, the porous fibrous carrier layer consists of polyester-based bicomponent filaments. A porous fibrous carrier layer fully consisting of polyester allows easier recycling of either production cut-offs and/or of the porous fibrous carrier layer as a whole at the end of the product lifecycle. In this preferred embodiment, preferably, the first polymer is polyethylene terephthalate (PET) or polybutylene terephthalate (PBT) and the second polymer is a copolymer of polyethylene terephthalate (coPET) or a copolymer of polybutylene terephthalate (coPBT).

In this embodiment, at least a part of the polyester may advantageously be of a recycled nature. For example, the PET used as first polymer may be obtained from consumer products like PET bottle flakes or from PET packaging items or from PET marine products like fishing nets, by melting them and forming them into pellets that may be used for the spinning process. Using recycled polyester has the advantage of reducing the environmental impact of the manufacturing process of the underbody trim part according to the invention, in particular its CO₂ footprint. In this embodiment, preferably at least 20%, more preferably at least 50% and even more preferably at least 70% of the polyester used for the bicomponent fibers is recycled polyester, wherein the percentage is the weight percentage calculated in respect of the total weight of the porous fibrous carrier layer.

In another embodiment, the porous fibrous carrier layer comprises a mixture of staple fibers and a binder, wherein the staple fibers are cross-lapped and needled and wherein the binder is either thermoplastic or thermoset. When a thermoplastic binder is used, it is preferably in the form of a thermoplastic bicomponent staple fiber, preferably consisting of polyester, polyamide or polypropylene. When a thermoset binder is used, it is preferably in the form of a resin, preferably epoxy resin or phenolic resin. Staple fibers are fibers that, differently from filaments, come in discrete predefined lengths and they are typically obtained by cutting endless filaments after their production.

In this embodiment, the staple fibers are preferably organic fibers, such as cotton, kenaf, hemp, or synthetic thermoplastic fibers such as polyester, preferably PET or PBT, or polyamide, preferably polyamide-6 or polyamide-66, or polyolefin, preferably polypropylene or polyethylene, or inert fibers, preferably glass fibers, carbon fibers or ceramic fibers, or mixtures thereof.

The staple fibers may be virgin fibers or they may at least in part have a reclaimed or recycled origin or they may be made using at least in part recycled content.

Preferably, the diameter of the staple fibers is between 14 microns and 37 microns, more preferably between 20 microns and 25 microns, for increased strength.

Quite surprisingly, even starting from a non-woven porous fibrous mat comprising a mixture of staple fibers and a binder wherein the staple fibers are cross-lapped and needled and compressing it under heat it is possible to confer to the resulting layer a structural nature and to obtain a porous fibrous carrier layer. This thanks to a combined effect of the binder and of the needling of the staple fibers, which enhances the mechanical properties of the layer obtained from the process. On one hand, thanks to the binder, a multitude of discrete binding points among adjacent staple fibers is formed during the process. On the other hand, thanks to the needling, the fibers are mutually entangled. The combination of these two effects leads to a strong fibrous network despite the limited length of the fibers.

In case the binder is in the form of a thermoplastic bicomponent staple fiber, the temperature used during the moulding should be high enough to soften or melt the low-melting-temperature polymer comprised in the binder fiber but still below the softening or melting temperature of the high-melting-temperature polymer comprised in the binder fiber. In case the binder is in the form of a thermoset resin, the temperature used during the moulding must be high enough to cure the resin, causing the cross-linking of its polymeric chains.

In a preferred embodiment, both the staple fibers and the binder are polyester bi-component fibers wherein the first polymer is preferably PET or PBT and the second polymer is preferably a copolymer of PET or a copolymer of PBT and the softening or melting temperature of the low-melting-polymer of the binder fibers is lower than that of the low-melting polymer of the staple fibers. In this way, a porous fibrous carrier layer fully consisting of polyester is obtained, which is advantageous from the recycling standpoint. A porous fibrous carrier layer fully consisting of polyester allows easier recycling of either production cut-offs and/or of the porous fibrous carrier layer as a whole at the end of the product lifecycle.

In this embodiment, at least a part, preferably at least 20%, more preferably at least 50% and even more preferably at least 70% of the polyester may advantageously be of a recycled nature, wherein the percentage is the weight percentage calculated in respect of the total weight of the porous fibrous structural layer. Using recycled polyester has the advantage of reducing the environmental impact of the manufacturing process of the underbody trim part according to the invention, in particular its CO₂ footprint.

In another preferred embodiment, the staple fibers are inorganic fibers, preferably glass fibers or carbon fibers or a mixture thereof and the thermoplastic binder consists of polyamide, preferably polyamide 6 or polyamide 66, or polyolefin, preferably polypropylene. The use of inorganic fibers such as glass fibers or carbon fibers may further enhance structural stiffness (in particular bending stiffness) and it may also enhance the dimensional stability and the shape definition of the porous fibrous carrier layer.

In this embodiment, the amount of inorganic fibers is preferably between 20% and 80% by weight, more preferably between 30% and 70% by weight, even more preferably between 40% and 60% by weight, wherein the percentage is the weight percentage calculated in respect of the total weight of the porous fibrous carrier layer.

The material or materials used for the porous fibrous carrier layer are preferably of the same chemical group of the material or materials used for the embossed foil. This makes the recycling of the complete trim part according to the invention at the end if its lifecycle possible. Even more preferably, both the porous fibrous carrier layer and the embossed foil consist of materials belonging to the group of polyesters.

The area weight of the porous fibrous carrier layer is mostly determined by design and functional constraints. A too high area weight is obviously undesirable, since it leads to an increase of the overall vehicle weight and then to higher fuel consumption and CO₂ production. At the same time, a too low area weight may be problematic for important functional performances such as stone chipping. In the part according to the invention, the porous fibrous carrier layer has an area weight preferably between 600g/m² and 2500g/m², more preferably between 800g/m² and 1700g/m² and even more preferably between 900g/m² and 1400g/m².

The larger the thickness of the porous fibrous carrier layer, the higher the absorption of the trim part according to the invention, in particular at high frequency. At the same time, though, a too large thickness may be undesirable for packaging space reasons and it may be detrimental for the bending stiffness of the porous fibrous carrier layer, since fibrous materials might become too lofty and too soft with an increased thickness. Preferably, the thickness of the porous fibrous carrier layer comprised in the trim part according to the invention is comprised between 1mm and 10mm, more preferably between 2mm and 7mm.

The higher the bending stiffness of the porous fibrous carrier layer, the higher is the bending stiffness of the trim part according to the invention. Preferably, the bending stiffness of the porous fibrous carrier layer is above 0.2N/mm, more preferably above 0.35N/mm, even more preferably above 0.6N/mm independently from the bending direction considered.

In order to enhance the acoustic properties of the underbody trim part according to the invention, a thin fibrous porous layer (commonly known in the field as "scrim") or a micro-perforated polymeric foil with tuned airflow resistivity may be laminated at least on a part of one side of the porous fibrous carrier layer, preferably on a side for facing the road. The airflow resistivity of the fibrous scrim or of the micro-perforated polymeric foil is preferably higher than that of the porous fibrous carrier layer, more preferably at least 20% higher than that of the porous fibrous carrier layer, in all areas where the fibrous scrim or micro-perforated film is applied.

In this embodiment, the fibrous scrim or the micro-perforated polymeric foil has preferably an area weight not higher than 400 g/m², more preferably not higher than 200 g/m², in order not to substantially increase the overall weight of the underbody trim part according to the invention.

Preferably, the additional fibrous scrim or micro-perforated foil is made with material or materials belonging to the same chemical group of the material or materials constituting the porous fibrous carrier layer, in such a way to favour recycling.

Always in order to further enhance acoustic absorption, the trim part according to the invention may further comprise one or more additional acoustic absorbers, located on the side of the porous fibrous carrier layer, preferably on a side for facing the vehicle. Additional acoustic absorbers may comprise any kind of acoustically absorbing material known in the art, for example a fibrous material such as a textile non-woven or a felt or a cellular material such as an open cell foam, in particular a polyurethane foam.

An additional acoustic absorber may be in the form of a layer comprising one or more acoustically absorbing materials. In this case, such additional acoustic absorber may be laminated together with the porous fibrous carrier layer and it may be structurally connected to it by gluing and/or by stapling and/or by welding (e.g. ultrasound welding) and it may thus also contribute to further enhance the structural rigidity of the trim part according to the invention, in particular its bending stiffness. Such an additional acoustic absorber may cover totally or partially the side of the porous fibrous carrier layer on which it is applied.

An additional acoustic absorber may also be in the form of a block of acoustically absorbing material. Here, a "block" is a body wherein no dimension is substantially smaller than the others. In this case, the additional acoustic absorber may be arranged upon and/or adhesively bonded to one side of the porous fibrous carrier layer and it is preferably accommodated in correspondence of depressions, and/or irregularities of the porous fibrous carrier layer itself.

All the above mentioned means to enhance the acoustic absorption of the underbody trim part according to the invention, i.e. the addition of a scrim and/or of a micro-perforated foil and/or of an additional absorber may be combined as technically possible and known in the art. For example, a micro-perforated polymeric foil may be laminated at least on a part of one side of the porous fibrous carrier layer and, furthermore, a layer of acoustically absorbing material may be added on top of the micro-perforated foil.

The trim part according to the invention may be produced using methods known in the art. In particular, the porous fibrous carrier layer and the embossed foil may be produced separately and then locally bonded to each other in a subsequent step.

The porous fibrous carrier layer may be produced, for example, by compressing, moulding and consolidating under heat a porous fibrous non-woven mat. The embossed foil may be produced, for example, by vacuum moulding or by injection moulding. Eventually, the porous fibrous carrier layer and the layer with embossments may be locally bonded to each other using methods known in the art, e.g. by gluing and/or by ultrasonic welding.

As far as the measurement of the bending stiffness is concerned, the ISO-178:2019 standard describing the "three-point-bending" test for measuring the bending stiffness of beam-shaped samples was followed, adapted to represent the bending stiffness showing the bending behaviour of the part according to the invention in the longitudinal direction. Compared to the ISO standard, the size of the sample to be tested, the size and the position of the supports, the size and the position of the indenter were adapted as shown in following example. In general a sample having a length of 420mm is cut from the trim part in its longitudinal direction. The sample is preferably cut from the central region of the part in the longitudinal direction. However, it may be cut also from regions of the part closer to its ends in the longitudinal direction. In case the part's length in the longitudinal direction is less than 500mm, the whole part may be used as a test sample. In any case, care should be taken that the sample covers the full width of the part and it comprises as many embossments as possible in both directions. The supports and the indenter have the same size of 130mm, they are aligned in the longitudinal direction of the sample and they are centred in the transversal direction, i.e. in the direction normal to the longitudinal direction on a horizontal plane. The distance between the supports is 340mm and the indenter is positioned in the mid-plane between the supports. Starting from an initial preload of 0.1N, the force is progressively increased to obtain a controlled displacement of 100mm/min of the indenter. The force applied and the corresponding displacements of the indenter are recorded in a force-displacement curve. A straight line is calculated by means of a linear regression in the linear elastic part of the curve. The slope of this straight line expressed in N/mm represents the average ratio between force and displacement in the linear region of the force-displacement curve and it gives the bending stiffness of the sample in the direction parallel to the length of the part.

Any range given throughout this description should include the starting and end points as well as normal expected deviations in the measurements. Start and end-point values of different ranges may be combined.

Further embodiments of the invention may be derived from the description also by combining the different embodiments and examples of the invention and may be also derived from the description of the embodiments shown in the figures. The figures are schematic and not necessarily in scale.

### Brief description of the drawings

Figure 1 shows an example of an underbody trim part according to the invention.
Figure 2 shows a cross-section of the underbody trim part shown in Figure 1.
Figures 3a and 3b show, respectively, a perspective-view and a top-view of another trim part according to the invention.
Figure 4 shows a cross-section of the trim part of Figures 3a-3b.
Figure 5 shows another example of an underbody trim part according to the invention.
Figures 6a and 6b show, respectively, a side-view and a perspective-view of the test set-up used for the measurement of the bending stiffness.
Figure 7 shows a force-displacement curve obtained from a bending stiffness test carried out on a sample extracted from a part according to the invention, together with the straight line obtained from it by a linear regression in the linear elastic range corresponding to the displacement range between 10mm and 14mm.
Figure 8 shows the same force-displacement curve shown in Figure 7 obtained from a bending stiffness test carried out on a sample extracted from a part according to the invention, together with the analogous curves obtained from a similar test carried out on the porous fibrous carrier layer alone and on the embossed foil alone.
Figure 9 shows the acoustic absorption coefficient measured in Alpha Cabin for a part according to the invention, compared to that of the porous fibrous carrier layer alone.
Figures 10 and 11 show two other underbody trim parts according to the invention, wherein the porous fibrous carrier layer has a 3d-shape.

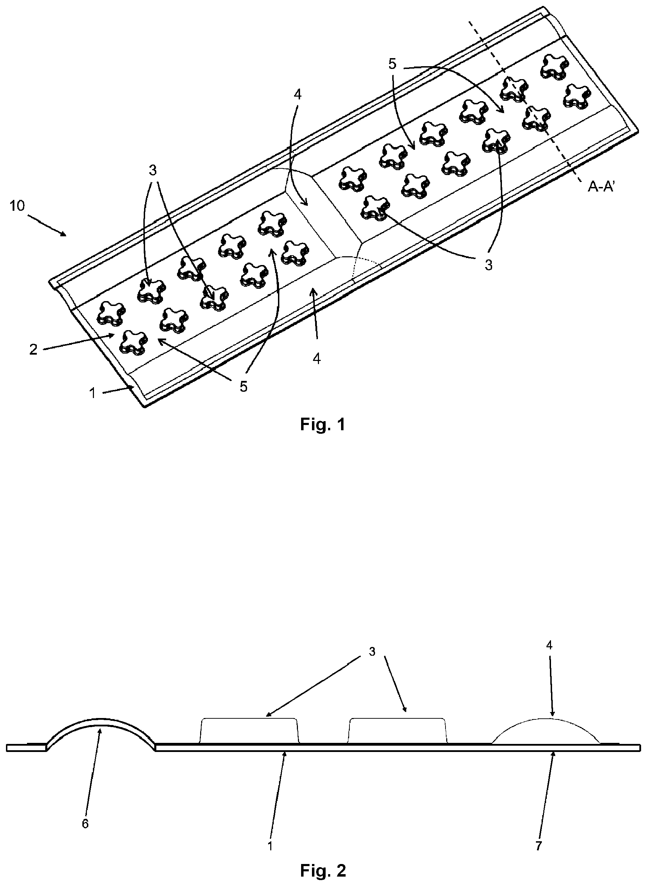

Figure 1 shows an example of an underbody trim part (10) according to the invention. The part comprises a porous fibrous carrier layer (1), and an embossed foil (2). The embossments (3)-(4) represent areas where the foil is in relief with respect to the porous fibrous carrier layer (1), i.e. three-dimensional elements raised from a substantially planar base. Some embossments (3) cooperate with the porous fibrous carrier layer (1) to form closed cavities, while for some other embossments (4) this is not the case. In correspondence of all areas not interested by the embossments (5), the embossed foil (2) conforms to the shape of the porous fibrous carrier layer (1) and, in this example, it is bonded to it. Furthermore, always in this example, the embossments (3) that cooperate with the porous fibrous carrier (1) to form closed cavities are all cross-shaped. The part according to the invention shown in Figure 1 has essentially a rectangular shape, with one dimension substantially bigger than the other dimension and it is made to be installed under a side-section of the main floor of a road vehicle. Its longitudinal direction, i.e. the direction to be aligned with the direction of travel when the part is in use, is aligned with its longer dimension, i.e. with its length.

Figure 2 shows the cross-section A-A' of the trim part according to the invention shown in Figure 1. This cross-section shows that the porous fibrous carrier layer may follow the shape of the embossed foil (2) in some non-flat areas (6) while in some other areas (7) this may not be the case.

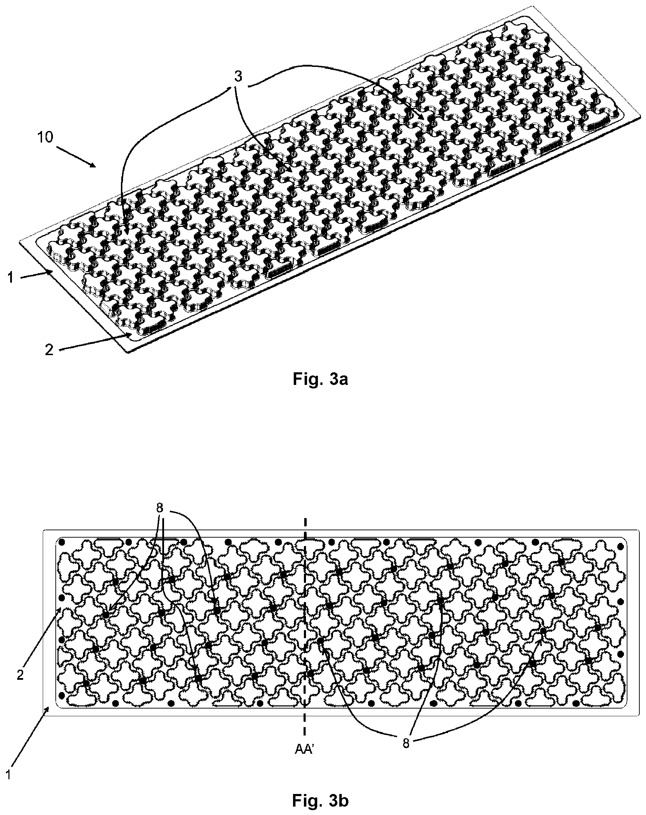

Figures 3a and 3b show, respectively, a perspective view and a top view of another underbody trim part according to the invention. Similarly to the underbody trim part shown in Figure 1, also this part has essentially a rectangular shape and it is made for being installed under a side section of a vehicle main floor. Its longitudinal direction, i.e. the direction of travel when the part is in use on a road vehicle, is aligned with its longer dimension, i.e. with its length. However, differently from the trim part shown in Figure 1, for the trim part shown in Figures 3a-3b the porous fibrous carrier layer is flat and all embossments (3) are cross-shaped and cooperate with the porous fibrous carrier layer (1) to form closed cavities. Furthermore, in the trim part shown in Figures 3a-3b, the embossed foil (2) is partially bonded to the porous fibrous carrier layer by means of ultrasound welding, according to the welding scheme shown in Figure 3b, wherein the black dots (8) indicate the positions of the welding points.

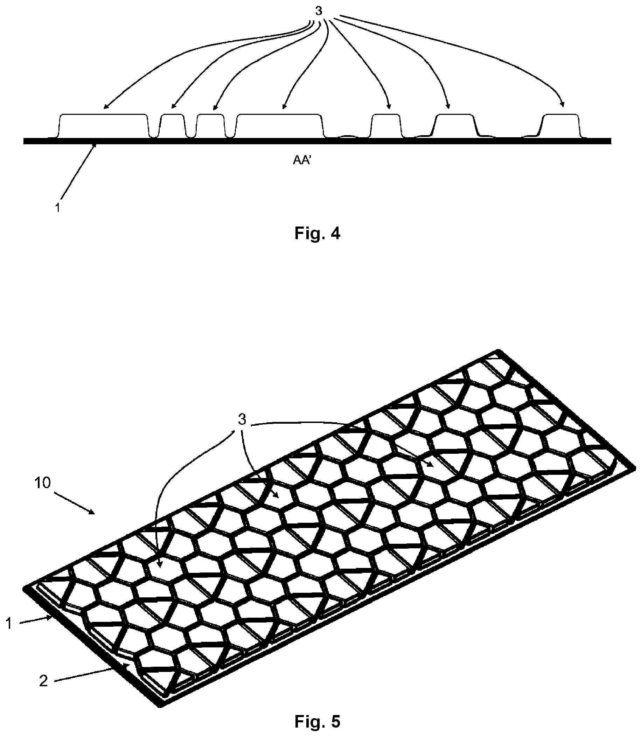

From the top view shown in Figure 3b it is also clear that, in the underbody trim part according to the invention shown in Figures 3a-3b, the embossments (3) are arranged such that any plane section of the embossed foil (2) cut normally to the longitudinal direction intersects at least one embossment. Just as an example, Figure 4 shows the cross-section AA' of the embossed foil obtained by cutting it in correspondence of the plane indicated in Figure 3b. As one can see, this section actually intersects a number of embossments (3) comprised in the embossed foil. The same result would be obtained with any cross section cut parallel to AA'.

Always from the top view shown in Figure 3b, one can understand that, actually, any plane section cut through the embossed foil intersects at least one embossment, independently from its orientation. With this kind of arrangement of the embossments, as previously explained, the desired stiffening effect is particularly pronounced, not only in the longitudinal direction of the part.

Figure 5 shows another example of trim part according to the invention (10), which differs from the one shown in Figure 3a for the fact that the embossments (3) have different shapes and sizes and they are not arranged according to a regular pattern. However, similarly to the case of the trim part shown in Figure 3a, also in this case the embossments are arranged in such a way that any plane section of the embossed foil (2) normal to the direction of the length of the part intersects at least one embossment.

A first example trim part according to the invention and according to the design shown in Figures 3a-3b was manufactured in the following way. A flat porous fibrous carrier layer having an area weight of 1031g/m², a width of 400mm, a length of 1220mm and a thickness of 4.3mm was realized, by compressing and consolidating under heat a non-woven porous fibrous mat consisting of 100% PET bicomponent filaments. The airflow resistivity of the porous fibrous carrier layer was measured according to ISO 9053-1:2018 and resulted equal to 336Ns/m³, being this value an average of the values obtained at 10 points distributed over the surface of the porous fibrous carrier layer. An embossed foil consisting of a single layer of A-PET (Amorphous PET) with a thickness of 0.45mm and presenting embossments shaped as a cross with arms of the same length and arranged in a regular pattern as shown in Figure 3a was realized by vacuum moulding. The height of the embossments is 15mm and their size is 58mm. The embossed foil (2) was bonded to the porous fibrous carrier layer (1) at a discrete set of points by ultrasound welding, according to the welding scheme indicated in Figure 3b, wherein the black dots (8) indicate the position of the welding points.

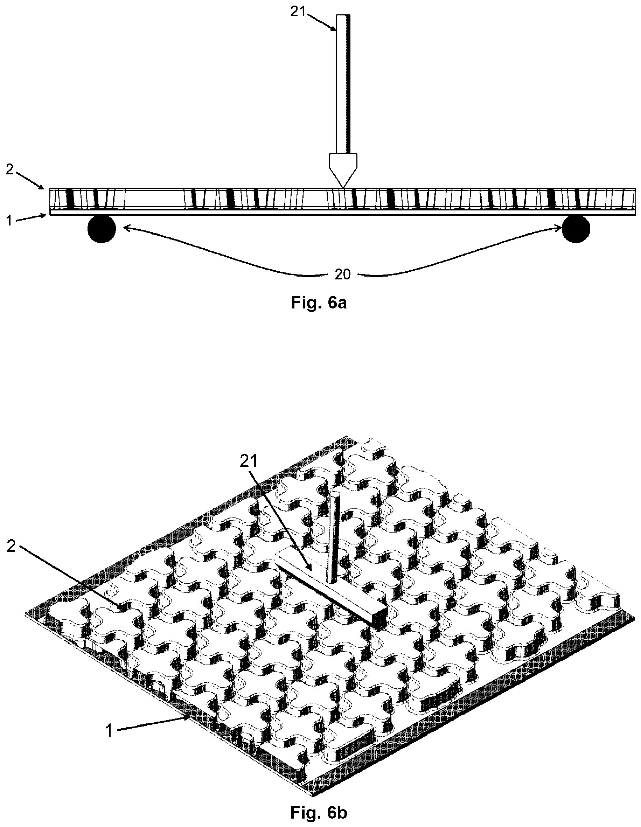

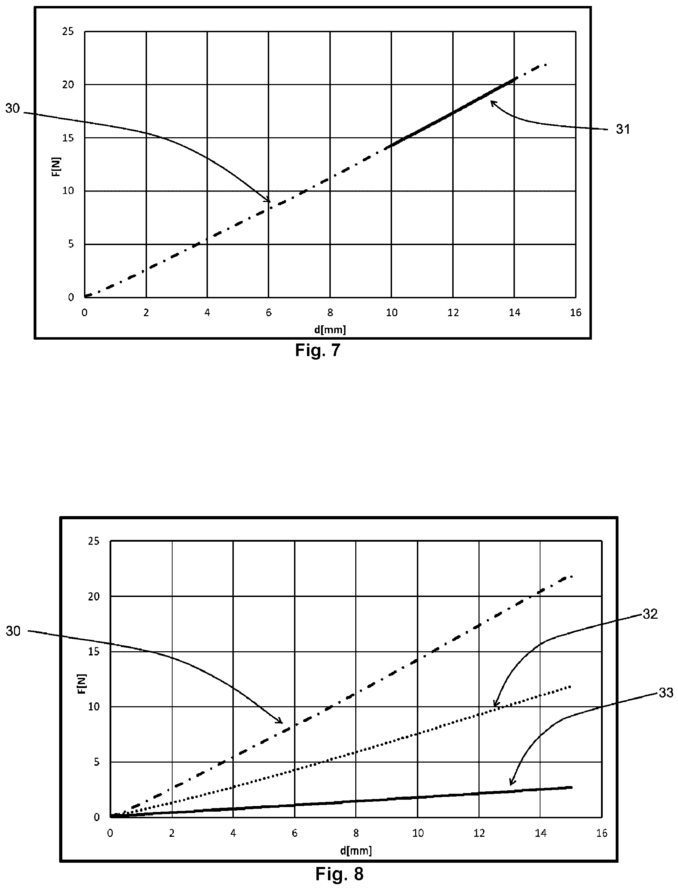

The bending stiffness of the first example trim part according to the invention in the direction parallel to its length (which coincides with its longitudinal direction) was measured according to the method previously described. In detail, a rectangular test sample having the same width of the part (400mm) and a length of 420mm was extracted from the central area of the part. The sample is shown in Figures 6a and 6b, together with the set-up used for the measurement of the bending stiffness in the length direction. Figure 6a shows a lateral view of the test set-up, while Figure 6b shows a top perspective view. The size of the sample corresponds to about one-third of the size of the part and it is such to be representative of the bending behaviour of the part in the direction parallel to its length, since it covers the full width of the part and it comprises several embossments in both directions. For the tests, the sample was laid on two rigid supports (20) parallel to the width direction, having a length of 130mm (i.e. about one-third of the sample's width) and positioned at a distance of 340mm (i.e. about four-fifths of the sample's length) from each other. The supports were centred with respect to the sample, in the width direction. A vertical force is applied by means of a linear rigid indenter (21) having the same length of the supports, arranged parallel to the supports themselves (20) and positioned exactly in the middle between the two supports. Starting from an initial preload of 0.1N, the force is progressively increased in such a way to obtain a controlled displacement of 100mm/min of the indenter. By recording the force applied and the corresponding displacement of the indenter, a force-displacement curve (30) like the dash-dotted line shown in Figure 7 is obtained. A straight line (31) may then be calculated by means of a linear regression in the linear elastic part of the curve, e.g. in the range of displacement between 10mm and 14mm for the case exemplified in Figure 7. This straight line (31) is shown in Figure 6 as a solid line in the displacement range between 10mm and 14mm. The slope of this straight line expressed in N/mm represents the average ratio between force and displacement in the linear region of the force-displacement curve and it gives the bending stiffness of the sample in the direction parallel to the length of the part.

An analogous test was repeated on a sample of the porous fibrous carrier layer alone, having the same size mentioned above and following a procedure completely analogous to the one above outlined for the sample extracted from the trim part according to the invention. Figure 8 shows the force-displacement curves obtained for the porous fibrous carrier alone and for the sample extracted from the part according to the invention. Namely, the dash-dotted line (30) shown in Figure 8 is the same shown in Figure 7 and it corresponds to the sample obtained from the part according to the invention, while the dotted line (32) shown in Figure 8 corresponds to the porous fibrous carrier alone. The much higher slope of the dash-dotted line (30) compared to that of the dotted line (32) shows that the sample obtained from the part according to the invention has a much higher bending stiffness than the porous fibrous carrier alone. Namely, from the force-displacement curves (30) and (32) it was calculated that the bending stiffness of the porous fibrous carrier layer alone is 0.86N/mm, while the bending stiffness of the sample extracted from the part according to the invention is 1.55N/mm, i.e. 80% higher than that of the porous fibrous carrier layer alone, which is a very impressive increase in bending stiffness.

A second example trim part according to the invention was realized, that differs from the first part only for the number of welding points used to bond the embossed foil to the porous fibrous carrier layer. Namely, in this second trim part, among all the welding points (8) indicated in Figure 3b, only those distributed around the boundary of the embossed foil (2) were kept. The number of welding points for this second trim part according to the invention is thus strongly reduced compared to that of the first trim part according to the invention previously described. The bending stiffness of this second trim part in the direction parallel to its length was measured following the same procedure described for the first part and resulted to be 1.41N/mm, just 9% lower than that of the first part and still about 67% higher than that of the porous fibrous carrier alone. This shows that, very surprisingly, a massive stiffening effect may be obtained by bonding the embossed foil according to the invention to the porous fibrous carrier layer in a really minimal way only around its boundary.

In order to understand the intrinsic level of bending stiffness of the embossed foil needed to achieve such an important stiffening effect, the bending stiffness of a sample of the foil alone was measured, following exactly the same procedure previously outlined for the sample extracted from the part according to the invention. The force-displacement curve (33) obtained for the sample of the embossed foil alone is shown as solid line in Figure 8. The bending stiffness of the embossed foil was then calculated from this curve and turned out to be 0.18N/mm, i.e. only about 21% of the bending stiffness of the porous fibrous carrier alone. This shows that a surprising improvement of 70%-80% in the bending stiffness of the porous fibrous carrier layer may be obtained by applying on it an embossed foil whose intrinsic bending stiffness is only just above 20% of the bending stiffness of the porous fibrous carrier layer itself. This shows also that the obtained increase in bending stiffness is not due to just a mere addition of the bending stiffness values of the porous fibrous carrier layer and of the embossed foil, but it is based on a synergistic effect between the porous fibrous carrier layer and the embossed foil, even minimally bonded to each other.

A third example trim part according to the invention was manufactured, which differs from the first trim part according to the invention only for the thickness of the porous fibrous carrier layer that, in this case, was 2.3mm. The bending stiffness of this third trim part according to the invention and of the porous fibrous carrier layer comprised in it were measured following the same procedure previously described and turned out to be, respectively, 1.15N/mm and 0.43N/mm. Thus, for this third part according to the invention, an increase in bending stiffness of more than 150% was obtained thanks to a foil whose bending stiffness in the longitudinal direction was about 42% of the bending stiffness of the porous fibrous carrier layer in the same direction.

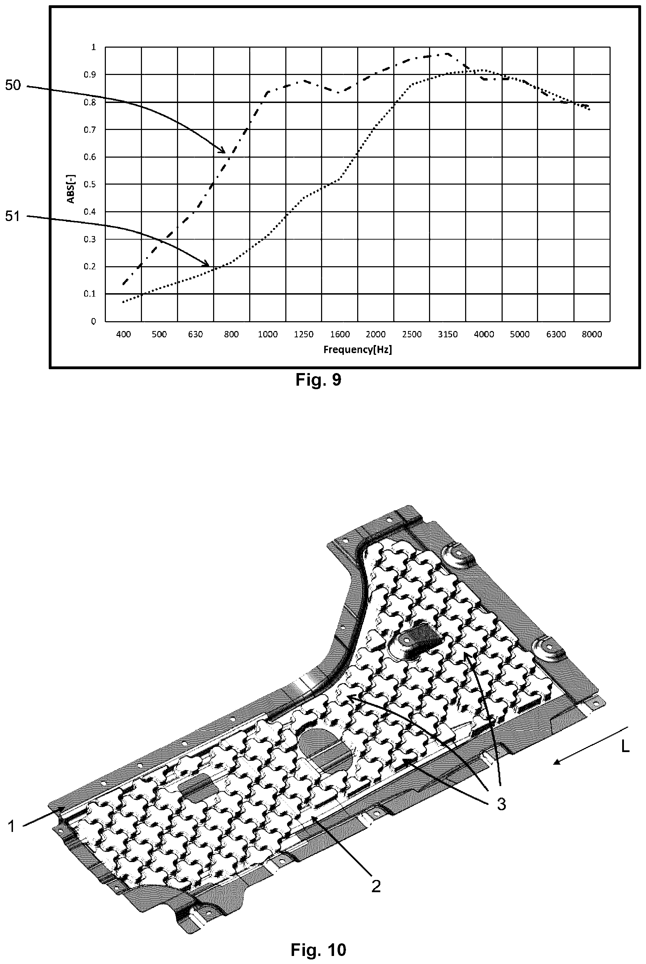

The acoustic absorption of the first example trim part according to the invention was measured by means of the Alpha Cabin measurement system, customarily used in the automotive field for absorption tests on sound absorbing trim parts. The trim part according to the invention was tested by lying it on the floor of the Alpha Cabin with the porous fibrous carrier layer facing upwards, i.e. exposed to the noise source. A comparative test was carried out on the porous fibrous carrier layer alone, leaving an air-gap of 15mm between this layer and the floor of the Alpha Cabin during the test. The dash-dotted line (50) in Figure 9 shows the absorption coefficient of the trim part according to the invention, while the dotted line (51) in the same Figure 9 shows the absorption coefficient of the porous fibrous carrier layer alone. As one can see, the trim part according to the invention has a much better absorption than the porous fibrous carrier layer alone, particularly in the frequency range between 800Hz and 1600Hz, which is known to be very relevant for tire noise.

Figure 10 shows a trim part according to the invention, wherein the porous fibrous carrier layer (1) is 3d-shaped and the embossed foil (2) comprises embossments similar to those of the trim part shown in Figure 3a, i.e. embossments having the shape of a cross with arms of the same length. The embossments are mostly arranged according to a regular pattern even though, for packaging space reasons, they do not cover some areas of the porous fibrous carrier layer (1). The part is made for being installed in the underbody region of a road vehicle and it features a longitudinal direction, indicated in Figure 10 by the arrow "L", that is intended for being aligned with the direction of travel of the road vehicle when the part is in use. Also in this part, the embossments are arranged such that any plane cross-section of the embossed foil intersects at least one embossment, which leads to a very pronounced increase of the bending stiffness of the part, both in the longitudinal direction and in any other direction.

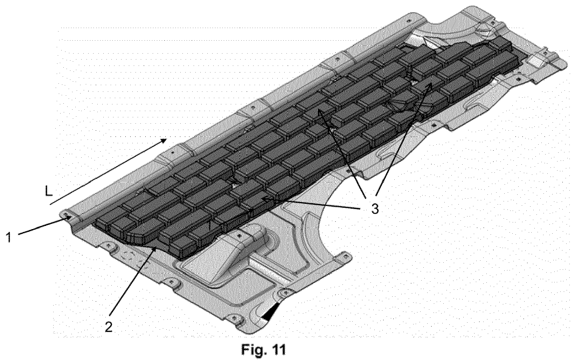

Figure 11 shows another trim part according to the invention, wherein the porous fibrous carrier layer (1) is 3d-shaped. However, in this case, the embossments (3) are not cross-shaped. Rather, they are in the form of rectangular prisms with rounded edges, aligned in the longitudinal direction, indicated in Figure 11 with an arrow "L". The embossments are staggered in the longitudinal direction in such a way that any plane cross section of the embossed foil (2) cut orthogonally to the longitudinal direction intersects at least one embossment which leads, as already explained, to a particularly pronounced increase of the bending stiffness in this same direction, compared to the case of the porous fibrous carrier (1) taken alone.

## Claims

1. A trim part made for being installed as the underbody of a road vehicle, comprising a porous fibrous carrier layer and featuring a longitudinal direction to be aligned with the direction of travel of the road vehicle when the part is in use, **characterized in that** it further comprises an embossed foil wherein the embossed foil is locally bonded to one side of the porous fibrous carrier layer and the bending stiffness of the embossed foil, in at least the longitudinal direction, is at least 10% of the bending stiffness of the porous fibrous carrier layer.

2. A trim part according to claim 1, wherein the bending stiffness of the embossed foil is at least 20%, preferably at least 40%, of the bending stiffness of the porous fibrous carrier layer, in at least the longitudinal direction.

3. A trim part according to claim 1 or 2, wherein the bending stiffness of the embossed foil in the longitudinal direction is at least 0.05N/mm, preferably at least 0.15N/mm.

4. A trim part according to any of the preceding claims, wherein any plane cross-section of the embossed foil cut perpendicularly to the longitudinal direction intersects at least one embossment.

5. A trim part according to any of the preceding claims, wherein any plane cross-section of the embossed foil intersects at least one embossment.

6. A trim part according to any of the preceding claims, wherein the total area of the embossments comprised in the embossed foil is at least 20%, preferably at least 30%, more preferably at least 50% of the total area of the embossed foil.

7. A trim part according to any of the preceding claims, wherein the height of the embossments comprised in the embossed foil is between 3mm and 50mm, preferably between 7mm and 30mm, more preferably between 10mm and 25mm.

8. A trim part according to any of the preceding claims, wherein at least one embossment has the shape of at least one between a right or tapered parallelepiped, a right or tapered prism having triangular or polygonal section, preferably an hexagonal section, a cross having arms of the same or different length.

9. A trim part according to any of the preceding claims, wherein the thickness of the embossed foil is comprised between 0.2mm and 1.0mm, preferably between 0.3mm and 0.7mm.

10. A trim part according to any of the preceding claims, wherein the area weight of the embossed foil is comprised between 100g/m² and 1000g/m², preferably between 300g/m² and 700g/m².

11. A trim part according to any of the preceding claims, wherein the foil comprises at least one of the polymers or copolymers selected from the group consisting of polyester, preferably polyethylene terephthalate (PET), more preferably amorphous PET, or polybutylene terephthalate (PBT); polyamide, preferably polyamide 6 or polyamide 66; polyolefin, preferably polypropylene (PP), polyethylene (PE), low density polyethylene (LDPE), linear low density polyethylene (LLDPE) or high density polyethylene (HDPE).

12. A trim part according to any of the preceding claims, wherein the porous fibrous carrier layer comprises one side for facing the vehicle and one side for facing the road and the side to which the embossed foil is partially bonded is the one for facing the vehicle.

13. A trim part according to claim 12, wherein at least one of the embossments comprised in the embossed foil cooperates with the porous fibrous carrier layer to form a closed cavity.

14. A trim part according to claim 12 or 13 wherein the airflow resistivity of the porous fibrous carrier layer is comprised between 100Ns/m³ and 3500Ns/m³, preferably between 200Ns/m³ and 2000Ns/m³, more preferably between 300Ns/m³ and 1300Ns/m³, being the airflow resistivity measured according to ISO 9053-1:2018.

15. A trim part according to any of the preceding claims, wherein the porous fibrous carrier layer comprises bicomponent filaments, preferably polyester bicomponent filaments or staple fibers, preferably bicomponent polyester staple fibers.

16. A trim part according to any the preceding claims, wherein the thickness of the porous fibrous carrier layer is between 1mm and 10mm, preferably between 2mm and 7mm.

17. A trim part according to any of the preceding claims, wherein the area weight of the porous fibrous carrier layer is comprised between 600g/m² and 2500g/m², preferably between 800g/m² and 1700g/m², more preferably between 900g/m² and 1400g/m².

18. Method for the production of a trim part according to any of the preceding claims and comprising at least the steps of: (a) moulding the porous fibrous carrier layer preferably by using at least one of cold moulding, hot moulding, steam injection moulding; (b) moulding the embossed foil, preferably using at least one of vacuum moulding, injection moulding, blow moulding, thermal moulding; (c) locally bonding the embossed foil onto the porous fibrous carrier layer, preferably by using one of ultrasonic welding or gluing.

19. Use of the trim part according to any of the preceding claims as an underbody liner, or an under-engine liner or a wheel-house outer liner.
